# EUROPEAN PATENT SPECIFICATION

(11) **EP 1 558 433 B1**
(45) Date of publication and mention of the grant of the patent: **28.11.2007**
(21) Application number: 03774886.0
(22) Date of filing: 17.10.2003
(51) Int. Cl.: B29C 45/16, B29C 45/76

(54) **METHOD FOR COATING AN INJECTION MOLDED ARTICLE**
VERFAHREN ZUM BESCHICHTEN EINES SPRITZGEGOSSENEN ARTIKELS
PROCEDE DE REVETEMENT D'UN ARTICLE MOULE PAR INJECTION

(30) Priority: 31.10.2002 US 422784 P
(43) Date of publication of application: 03.08.2005
(73) Proprietor: OMNOVA SOLUTIONS INC., Fairlawn, OH 44333-3300 (US)
(72) Inventor: MCBAIN, Douglas, Wadsworth, OH 44281 (US); STRAUS, Elliott, Akron, OH 44312 (US); THOMPSON, John, Wooster, OH 44691 (US)
(74) Representative: Gritschneder, Martin
(86) International application number: PCT/US2003/033186
(87) International publication number: WO 2004/041503

(56) References cited:
- EP-A- 0 472 312
- US-A1- 2002 039 656
- PATENT ABSTRACTS OF JAPAN vol. 1995, no. 02, 31 March 1995 (1995-03-31) -& JP 06 328504 A (DAINIPPON TORYO CO LTD), 29 November 1994 (1994-11-29)
- PATENT ABSTRACTS OF JAPAN vol. 2000, no. 21, 3 August 2001 (2001-08-03) & JP 2001 096573 A (DAINIPPON TORYO CO LTD;UBE IND LTD), 10 April 2001 (2001-04-10)

## Description

The present invention relates to a method according to the preamble of claim 1 for in-mold coating (IMC) a molded article or substrate formed from a thermoplastic or thermosetting resin, specifically a method for dispensing an IMC composition onto a molded thermoplastic article and controlling the same. The present invention finds particular application as a mobile coating cart and will be described with particular reference thereto.

Such method is disclosed by US 2002/0039656 A1 and by JP 06-328504 A, and it is a method of providing an in-mold coated molded article, comprising:
(a) injecting a molten resin into a mold cavity until the molding cavity is substantially filled;
(b) allowing the injected molten resin to cool in the molding cavity to form a molded article; and
(c) injecting a coating composition into the molding cavity and onto the molded article to coat the molded article when at least a surface to be coated of the molded article has reached a modulus sufficient to support said coating composition.

Molded thermoplastic and thermoset articles, such as those made from polyolefins, polycarbonates, polyesters, polystyrenes and polyurethanes, are utilized in numerous applications including those for automotive, marine, recreation, construction, office products, and outdoor equipment industries. Often, application of a surface coating to a molded thermoplastic or thermoset article is desirable. For example, molded articles may be used as one part in multi-part assemblies; to match the finish of the other parts in such assemblies, the molded articles may require application of a surface coating that has the same finish properties as the other parts. Coatings may also be used to improve surface properties of the molded article such as uniformity of appearance, gloss, scratch resistance, chemical resistance, weatherability, and the like. Also, surface coatings may be used to facilitate adhesion between the molded article and a separate finish coat to be later applied thereto.

Numerous techniques to apply surface coatings to molded plastic articles have been developed. Many of these involve applying a surface coating to plastic articles after they are removed from their molds. These techniques are often multi-step processes involving surface preparation followed by spray-coating the prepared surface with paint or other finishes. In contrast, IMC provides a means of applying a surface coating to a molded article prior to its ejection from the mold.

Molds used with thermoplastics usually are of a "clam shell" design having mated halves that meet at a parting line. One of the mated halves typically remains stationary whereas the other half typically moves between a closed position and an open, retracted position. To form a molded article, the movable half is moved to its closed position and held closed under a clamping force thereby forming a contained molding cavity. Molten material is injected into the molding cavity. The molded article is formed by thoroughly filling the cavity with the molten material and allowing the material to sufficiently cool and solidify. During the entire molding process, the movable mold half is maintained in its closed position. After molding, the mold halves can be opened and a finished, molded article ejected therefrom.

Owing to differences in mold design and molding conditions, processes where the mold is cracked or parted prior to injection of a coating composition generally are not used for the IMC of injection molded thermoplastics. When molding thermoplastics, it is generally necessary to maintain pressure on the movable mold half to keep the cavity closed and prevent material from escaping along the parting line. Further, maintaining pressure on the thermoplastic material during molding, which also requires keeping the cavity closed, often is necessary to assist in providing a more uniform crystalline or molecular structure in the molded article. Without such packing(i.e. , pressure maintenance), physical properties of the molded thermoplastic article tend to be impaired.

Because injection molding does not permit the mold to be parted or cracked prior to injection of the IMC composition into the mold cavity, the IMC composition must be injected under sufficient pressure to compress the article in all areas that are to be coated. The compressibility of the molded article dictates how and where the IMC composition covers it. The process of IMC an injection molded article with a liquid IMC composition is described in, for example, U.S. Patent No. 6,617, 033 and U.S. Patent Publication Nos. 2002/0039656 A1 and 2003/0082344 A1.

JP 04-138220 A discloses a storage equipment for pellet material comprising a plurality of material storage tanks, material transport pipes and material feed means. Each of the plurality of material storage tanks is connected to one of the material transport pipes via a solenoid valve. The material feed means is supplying the insides of the transport pipes with a pellet-shaped material extracted from material containers. Bar codes are annexed to the material containers, and information assigning the numbers of the material storage tanks is written on the bar codes. Bar code readers are reading the bar codes, and a valve control means is opening the valves of the material storage tanks having numbers designated by the bar codes on the basis of the bar codes read by the bar code readers.

Several important considerations must be accounted for when using a liquid IMC composition to coat an injection molded thermoplastic article. These include, without limitation, the amount of IMC composition to be injected into the cavity, the timing of when to inject the IMC composition into the cavity relative to the thermoplastic molding process, the rate at which the IMC composition is injected, the resulting IMC composition injection pressure, and the means for injecting the IMC composition.

The present invention provides a method of providing an in-mold coated molded article according to claim 1.

Further embodiments and features of the invention are described in the dependent claim.

A sensor can be used to determine when it is desirable to inject an IMC composition into the mold cavity. At the desired time, the sensor can generate a signal sent to the dispense and control apparatus. An amount of coating composition can be injected into the mold cavity by the dispense and control apparatus after receipt of the signal. Thus, the dispense and control apparatus can be used to inject IMC composition into a mold of an injection molding machine at a desirable point in the molding process of a thermoplastic molded article.

### BRIEF DESCRIPTION OF THE DRAWINGS

Fig. 1 is a side view of one embodiment of a molding apparatus suitable for use in or with a preferred embodiment of the present invention.

Fig. 2 is a partial cross-section through a vertical elevation of a mold cavity.

Fig. 3 is a perspective view of an IMC dispense and control apparatus adapted to be connected to the molding apparatus of Fig. 1.

### DETAILED DESCRIPTION OF THE INVENTION

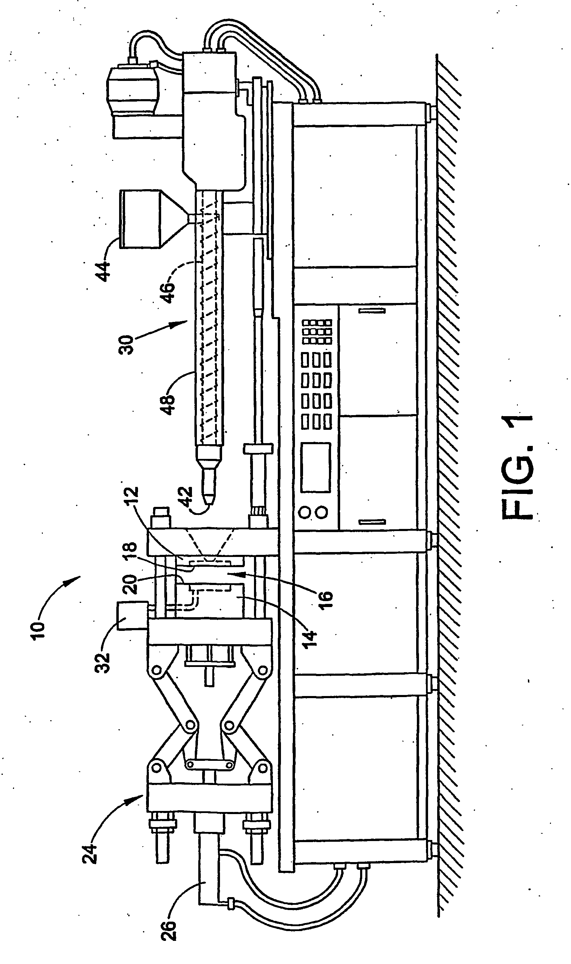

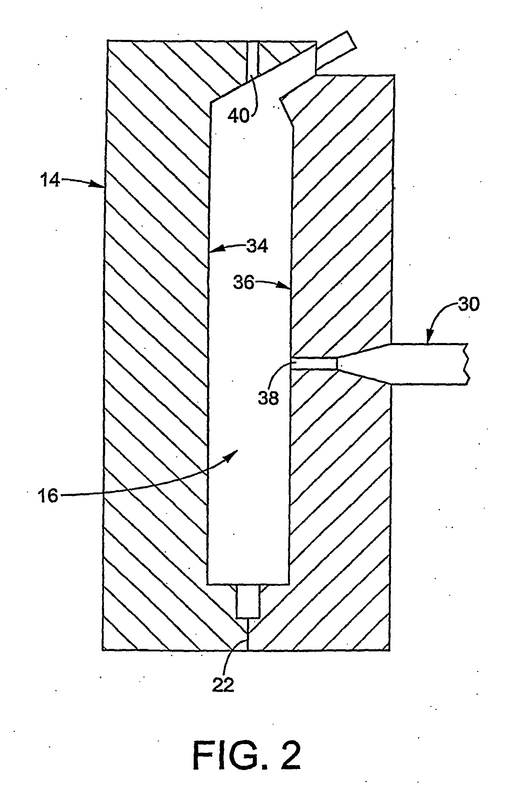

Referring to the drawings where like reference characters represent like elements and which illustrate certain embodiments of the invention, Fig. 1 shows a molding apparatus or injection molding machine 10 including first mold half 12 and second mold half 14. First mold half 12 preferably remains in a stationary or fixed position. Movable mold half 14 is shown in an open position but is movable to a closed position wherein the first and second mold halves 12,14 mate with one another to form contained mold cavity 16 of a finite volume therebetween, as shown in Fig. 2. More specifically, mold halves 12,14 mate along surfaces 18 and 20 (Fig. 1) when mold half 14 is in a closed position, forming parting line 22 (Fig. 2) therebetween and around mold cavity 16.

Movable mold half 14 reciprocates along a generally horizontal axis relative to mold half 12 by action of clamping mechanism 24 with clamp actuator 26 such as through a hydraulic, pneumatic or mechanical actuator as known in the art. Preferably, the clamping pressure exerted by clamping mechanism 24 is capable of generating an operating pressure in excess of the pressures generated or exerted by either one of first composition injector 30 and second composition injector 32. For example, pressure exerted by clamping mechanism 24 can range from 14 MPa (about 2,000 psi) to 105 MPa (about 15,000 psi), preferably from 25 MPa (about 4,000 psi) to 85 MPa (about 12,000 psi), and more preferably from 40 MPa (about 6,000 psi) to 70 MPa (about 10,000 psi) of the mold surface.

In Fig. 2, mold halves 12,14 are shown in a closed position abutting or mating with one another along parting line 22 to form mold cavity 16 having a substantially fixed volume. The design of mold cavity 16 can vary greatly in size and shape according to the desired end product or article to be molded. Mold cavity 16 generally has first surface 34 on second mold half 14 and a corresponding or opposite second surface 36 on first mold half 12. First mold half 12 defines first orifice 38 connecting to mold cavity 16 that allows first composition injector 30 to inject its composition into mold cavity 16. Similarly, second mold half 14 defines second orifice, also connecting to mold cavity 16, that allows second composition injector 32 (Fig. 1) to inject its composition into mold cavity 16.

First composition injector 30 is that which is typical in an injection molding apparatus or thermosetting and is generally capable of injecting a thermoplastic or thermosetting composition, generally a resin or polymer, into mold cavity 16. Owing to space constraints, first injector 30 is positioned to inject material from fixed mold half 12, although first composition injector 30 could be reversed and placed in movable mold half 14. Second composition injector 32 is capable of injecting an IMC composition into mold cavity 16 to coat the molded article formed therein, although second composition injector 32 alternatively could be positioned in mold half 12.

In Fig. 1, first composition injector 30 is shown in a "backed off" position but can be moved horizontally so that a nozzle or resin outlet 42 of first injector 30 mates with mold half 12. In the mated position, injector 30 is capable of injecting its contents into mold cavity 16. For purposes of illustration only, first composition injector 30 is shown as a reciprocating-screw machine wherein a first composition can be placed in hopper 44 and rotating screw 46 can move the composition through heated extruder barrel 48, which heats the first composition above its melting point. As the heated material collects near the end of barrel 48, screw 46 acts as an injection ram and forces the material through nozzle 42 and into mold cavity 16. Nozzle 42 generally has a valve (not shown) at the open end thereof and screw 46 generally has a non-return valve (not shown) to prevent backflow of material into screw 46.

First composition injector 30 is not meant to be limited to the embodiment shown in Fig. 1 but can be any apparatus capable of injecting a flowable (e.g., thermoplastic or thermosetting) composition into mold cavity 16. For example, the injection molding machine can have a mold half movable in a vertical direction such as in a "stack-mold" with center injection. Other suitable injection molding machines include many of those available from Cincinnati-Milacron, Inc. (Cincinnati, Ohio), Battenfeld Injection Molding Technology (Meinlerzhagen, Germany), Engel Machinery Inc. (York, Pennsylvania), Husky Injection Molding Systems Ltd. (Bolton, Canada), BOY Machines Inc. (Exton, Pennsylvania) and others.

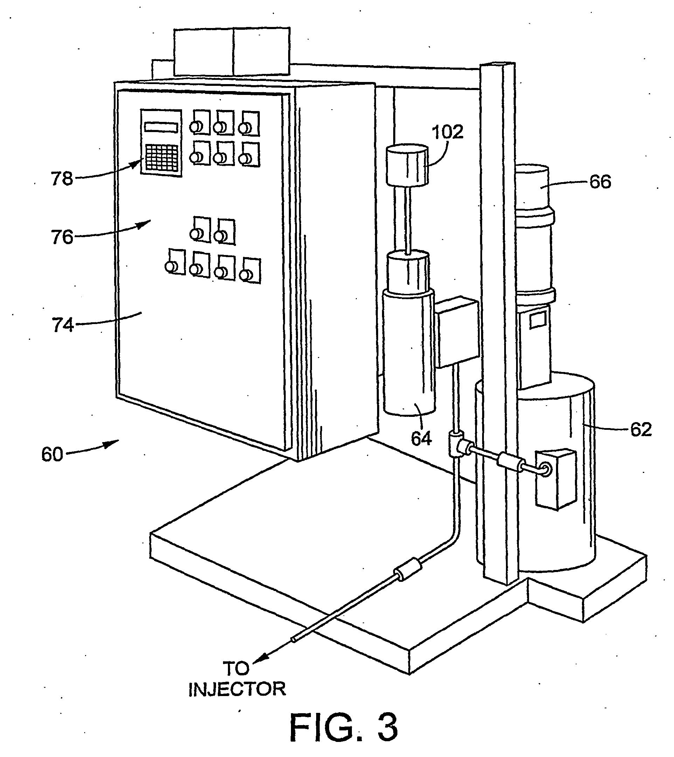

Referring to Fig. 3, a dispense and control apparatus 60 is capable of being connected to molding apparatus 10 to provide IMC capabilities and controls therefor to molding apparatus 10. I.S. Control apparatus 60 includes an IMC container receiving cylinder 62 for holding an IMC container filled with an IMC composition, such as that U.S. Patent No. 5,777,053. Control apparatus 60 further includes a metering cylinder or tube 64 adapted to be in fluid communication with IMC container when received in receiving cylinder 62. An air-driven transfer pump 66 is provided on control apparatus 60 and is capable of pumping IMC composition from receiving container 62 to metering cylinder 64.

Metering cylinder 64 is selectively fluidly connectable to second injector 32 on molding apparatus 10. Metering cylinder 64 includes a hydraulic means such as a hydraulic piston for evacuating IMC composition from metering cylinder 64 and directing the evacuated IMC composition to second injector 32. A return line (not shown) is connected to second injector 32 and to receiving container 62 to fluidly communicate therebetween.

Control apparatus 60 further includes an electrical box 74 capable of being connected to a conventional power source. Electrical box 74 includes a plurality of controls 76 and a touch pad controller 78 thereon for controlling dispensing IMC composition to mold cavity 16 of molding apparatus 10. A compressed air connector (not shown) is provided on control apparatus 60 for connecting control apparatus 60 to a conventional compressed air line. Compressed air is used to drive transfer pump 66 and remove IMC composition from control apparatus 60 and its fluid communication lines during a cleaning or evacuation. Additionally, air can be used to move a solvent through the communication lines for cleaning purposes.

Apparatus 60 includes a remote sensor (not shown) that is adapted to be positioned, in the preferred embodiment, on one of mold halves 12,14. The sensor can be a conventional rocker switch that sends a signal to apparatus 60 upon actuation. The sensor is positioned on one of mold halves 12,14 such that it is actuated upon mold closure. The signal sent from the sensor is used to initiate a timer on apparatus 60. Alternatively, the sensor could be placed in another location such as the tie bar-machine ways to indicate when mold closure.

Alternatively, molding apparatus 10 may be equipped with a sensor or sensor means that has the ability to generate a signal upon closure of mold halves 12,14. A conventional signal transfer cable could be connected between molding apparatus 10 and control apparatus 60 for communicating the signal to control apparatus 60. Such an arrangement would eliminate the need for connecting an independent sensor to one of mold halves 12,14.

To prepare for injecting IMC composition into mold cavity 16, a container of a desired IMC composition is placed in receiving cylinder 62. Metering cylinder 64 is fluidly connected to second injector 32. Return line 68 is fluidly connected to second injector 32 and receiving cylinder 62. Control apparatus 60 is connected to a suitable power source such as a conventional 460 volt AC or DC electrical outlet to provide power to electrical box 74. Control apparatus 60 is also connected to a compressed air source to provide a pneumatic means, such as a compressed air source, for evacuating IMC composition from apparatus 60 and its fluid communication lines when a cleaning operation is desirable and/or moving a solvent through apparatus 60 and its fluid communication lines. The sensor is appropriately positioned on one of mold halves 12,14 as described above.

To make an IMC thermoplastic article, a thermoplastic first composition is placed in hopper 44 (Fig. 1) of molding apparatus 10. First injector 30 is moved into nesting or mating relation with fixed mold half 12. Through conventional means, i.e., using heated extruder barrel 48 and rotating screw 46, first injector 30 heats first composition above its melting point and directs heated first composition toward nozzle 42 of first injector 30. Mold halves 12, 14 are closed thereby creating contained mold cavity 16 having a substantially fixed volume. As described above, the sensor of control apparatus 60 is positioned on one of mold halves 12,14 such that when mold halves 12,14 are closed together the sensor sends a signal to control apparatus 60 indicating that mold halves 12,14 are closed and that the molding process has begun.

Upon receipt of the signal, hereinafter To, dispense and control apparatus 60 initiates the timer contained therein. The timer is used to track elapsed time from To. At predetermined elapsed time intervals, control apparatus 60 actuates and controls various IMC related functions to insure that the IMC composition is delivered to mold cavity 16 at a desired point in the molding process. Thus, control apparatus 60 operates simultaneously with molding apparatus 10.

After To, the molding process continues and a nozzle valve (not shown) of nozzle 42 is moved to an open position for a predetermined amount of time to allow a corresponding quantity of the first composition to enter mold cavity 16. Screw 46 provides a force or pressure that urges or injects first composition into mold cavity 16 until the nozzle pin is returned to its closed position. First composition is filled and packed into mold cavity 16 as is well known in the art. Once mold cavity 16 is filled and packed, molded first composition is allowed to cool thereby forming a molded article.

After first composition has been injected into mold cavity 16 and the surface of the molded article to be coated has cooled below the melt point or otherwise reached a temperature or modulus sufficient to accept or support an IMC composition but before the surface has cooled too much such that curing of the IMC composition would be inhibited, a predetermined amount of a second composition which is an IMC composition is ready for injection into mold cavity 16 through second orifice 40 (Fig. 2) of second composition or IMC composition injector 32. This point in the molding process, hereinafter T_{IMC}, can be characterized as an elapsed time from To. For second injector 32 to inject the IMC composition precisely at T_{IMC}, apparatus 60 has to perform several functions at precise times between Tₒ and T_{IMC}. Each of these functions occurs at a predetermined elapsed time relative to Tₒ.

One such function is filling metering cylinder 64 with a desired amount of IMC composition. This function occurs a predetermined elapsed time from Tₒ but in advance of T_{IMC}. Thus, at the pre-selected elapsed time, control apparatus 60 opens a valve (not shown) that permits fluid communication between the IMC composition-filled container and metering cylinder 64. Transfer pump 66 then pumps IMC composition from the container to metering cylinder 64. When metering cylinder 64 is filled a desired amount, the valve closes to prevent more IMC composition from entering the cylinder. The amount of IMC composition permitted to enter cylinder 64 is selectively adjustable.

After metering cylinder 64 is filled and just prior to T_{IMC}, control apparatus 60 opens a pin or valve (not shown) on second injector 32 to allow fluid communication between second injector 32 and mold cavity 16. The pin is normally biased or urged toward a closed position, i.e., flush to the mold surface, but is selectively movable toward the open position by control apparatus 60. Specifically, in a preferred embodiment, an electrically powered hydraulic pump (not shown) of control apparatus 60 is used to move the pin. Very shortly thereafter, at T_{IMC}, the hydraulic means of metering cylinder 64 evacuates IMC composition contained therein and delivers it to second injector 32, where it passes through orifice 40 and into mold cavity 16.

The mold is not opened or unclamped before IMC composition is introduceda; mold halves 12,14 maintain a parting line 22 and generally remain a substantially fixed distance relative to one another while first and second compositions are injected into mold cavity 16. Thus, the substantially fixed volume of mold cavity 16 is constant and maintained throughout the molding and coating steps. When injected, the IMC composition spreads from the mold surface and coats a predetermined portion or area of the molded article. Very shortly after the IMC composition is fully injected into mold cavity 16, apparatus 60 allows the valve of second injector 32 to return to its closed position, thereby preventing further injection of IMC composition into mold cavity 16.

After the predetermined amount of IMC composition is injected into mold cavity 16 and covers or coats the predetermined area of the article or substrate, the coated substrate can be removed from the mold. However, before the mold halves 12,14 are parted, the IMC composition is cured by components present within the coating composition. The cure is optionally heat activated, from sources including the substrate or mold halves 12,14 which are at or above the curing temperature of the IMC composition. Cure temperature will vary depending on the IMC composition utilized. As mentioned above, the IMC composition is injected before the molded article has cooled to the point below where proper curing of the coating can be achieved. The IMC composition requires a minimum temperature to activate the catalyst present therein which causes a cross-linking reaction to occur, thereby curing and bonding the coating to the substrate.

Between IMC composition injections, control apparatus 60 uses transfer pump 66 to circulate IMC composition through the system. The pin on second injector 32 remains in its closed position thereby preventing any IMC composition from entering mold cavity 16. One purpose of circulating the IMC composition between cycles is to prevent any particular portion of the coating from becoming undesirably heated due to its proximity to heating mechanisms on molding apparatus 10. Such heating could detrimentally impact the material properties of the IMC composition or could block the IMC fluid lines by solidifying the IMC composition therein.

Controls 76 and keypad 78 of control apparatus 60 enable an operator to adjust and/or set certain operating parameters of control apparatus 60. For example, the controls can be manipulated to increase or decrease the amount of IMC composition to be filled in metering cylinder 64 by allowing the valve that controls communication between metering cylinder 64 and receiving container 62 to remain open for a longer duration. Additionally, the controls can be manipulated to adjust the elapsed time from To that metering cylinder 64 is filled by transfer pump 66 and/or the amount of time elapsed from To that cylinder 64 is emptied by the hydraulic means. This time may be adjusted to more closely approximate T_{IMC}.

In another embodiment, the sensor is a pressure transducer mounted adjacent mold cavity 16 and adapted to record a pressure in mold cavity 16. In this embodiment, the timer of control apparatus 60 can be eliminated. Rather than using the elapsed time from the start of the mold process, control apparatus 60 injects IMC composition into mold cavity 16 based on the pressure recorded in mold cavity 16 by the pressure transducer sensor. The IMC composition is desirably injected into mold cavity 16 at the same point in the molding process, T_{IMC}, irrespective of what type of sensor is used. Thus, rather than being time dependent, this embodiment is pressure dependent.

The pressure in mold cavity 16 will initially rise while the thermoplastic resin fills mold cavity 16. The pressure will rise further as mold cavity 16 is packed. Finally, the pressure in mold cavity 16 will begin to decrease as the thermoplastic molded article cools and begins to solidify. At a predetermined pressure during the cooling phase that corresponds with T_{IMC}, the IMC composition is preferably injected into mold cavity 16. The predetermined pressure is generally based on the specific type of thermoplastic resin used and may also be based on the specific type of IMC composition used.

Based on the pressure measurements taken by the pressure transducer sensor, the series of functions performed by control apparatus 60 also can be dependent on the pressure measured in mold cavity 16. Thus, each of the functions will occur at a predetermined pressure in mold cavity 16 so that the IMC composition can be injected into mold cavity 16 at the desired point in the molding process. Injecting IMC composition into a mold cavity 16 and onto the surface of a molded article based on the pressure measured in mold cavity 16 is described in U.S. Patent No. 6,617,033.

The pressure transducer alternatively can be a plurality of pressure transducers positioned at varying locations around mold cavity 16. In this arrangement, control apparatus 60 performs its functions, including injecting the IMC composition based on a plurality of pressure measurements. For example, control apparatus 60 can perform its functions based on predetermined pressure averages of the plurality of pressure measurements taken by the plurality of pressure sensors. This arrangement may be desirable because a plurality of pressure transducers may be able to better determine the actual pressure observed in mold cavity 16.

Some conventional injection molding machines and molds already are equipped with one or more transducers adapted to measure pressure in mold cavity 16. These machines often are capable of sending a signal representative of the measured pressure or pressures to associated equipment such as control apparatus 60 through conventional data transfer means. In this case, the need for a remote pressure transducer sensor is eliminated. Control apparatus 60 need only be suitably connected to injection molding machine 10 to receive the signal representative of the pressure measurement(s) taken from mold cavity 16.

In another embodiment, the sensor is a thermocouple mounted adjacent mold cavity 16 and adapted to record a temperature in mold cavity 16. In this embodiment, the timer of control apparatus 60 can also be eliminated. Further, control apparatus 60 injects IMC composition into the mold cavity 16 based on the temperature recorded in mold cavity 16 by the thermocouple sensor. The IMC composition is desirably injected into mold cavity 16 at the same point in the molding process, T_{IMC}, as the previous sensors. The main difference is injection of the IMC composition is temperature dependent.

Control apparatus 60 can be equipped with and/or connected to a data collection means. The data collection means can be an on-board hard drive or other recording medium that is capable of recording the operating parameters set on control apparatus 60 for one or a series of molded articles. Other alternate arrangements are possible, such as, for example, connecting the apparatus to a network and recording operating parameters at a remote location. In any case, the data collection means can record the predetermined elapsed time settings from To that the various control apparatus functions are set to use and/or the actual elapsed time intervals when the various functions occur.

For example, for each injection of IMC composition, the data collection means can record the time from To that transfer pump 66 fills metering cylinder 64, the time from To that the pin of second injector 32 opens, the time from To that the hydraulic means evacuates metering cylinder 64 and second injector 32 injects the IMC composition into mold cavity 16 and/or the time from To that the pin of second injector 32 closes. Other functions also can be recorded including without limitation the number of IMC composition injections for a specific amount of IMC composition, the hydraulic pressure used to evacuate metering cylinder 64, etc.

If one or more pressure transducers are used in place of the rocker switch (a time dependent sensor), the data collection means can be used to record related measurements therewith. For example, the data collection means can record the specific measured pressures at which time the various functions of control apparatus 60 occur. Likewise, if the sensor is a thermocouple, the temperature measurements taken thereby can be recorded.

In any case, the data or information recorded by the data collection means can be used for quality control purposes. For example, a coated part can be examined upon being ejected from mold cavity 16 and compared against the data collected on the specific injection of IMC composition associated with that part. If the part does not meet certain quality control requirements, such as lack of adhesion between the coating and the thermoplastic, lack of scratch resistance, surface imperfections, lack of adequate coating coverage, etc., the present parameters (whether time dependent, pressure dependent, temperature dependent or otherwise), can be adjusted to improve the coating characteristics of future coated parts.

Control apparatus 60 can also be equipped with a means for transferring collected data. This can be through any conventional means including providing a disk drive or the like that allows the data to be recorded to a mobile storage medium, providing a data link that is connectable to a local computer, an intranet, the internet, other network, etc. Such means for transferring data can allow remote analysis of the collected data in real-time.

Control apparatus 60 also can include a conventional package code reader (not shown) such as a bar code reader. The reader can be used to scan a code on a particular container of IMC composition placed in receiving cylinder 62 and injected onto a plurality of molded parts. Used in conjunction with the data collection means described above, the code for a particular container of IMC composition can be associated with data recorded for all injections of IMC composition from the particular container. Further, the code of the IMC container can be associated with a finished parts bin or collection means that receives finished parts with a coating thereon from molding apparatus 10. Recording and storing such information allows particular finished parts to be analyzed and easily compared against the data recorded thereabout and the particular IMC composition used.

In another embodiment, control apparatus 60 can be provided with a user interface that allows a user to simply select a part icon that represents a series of parts to be molded and coated. Selection of a specific part icon on the user interface presets the control parameters on control apparatus 60 whether they are time-based, cavity pressure-based, or otherwise. The user interface eliminates the need for an operator to set the control parameters individually each time a new part series is to be run through the molding and coating process.

In any embodiment discussed herein, control apparatus 60 can be provided with a display means such as a monitor (not shown). Display means can display, in real time, any of the data or information being sensed and/or recorded by control apparatus 60. Further, control apparatus 60 could be configured to only allow a specific number of injections per container of IMC composition. Alternatively, or additionally, control apparatus 60, when used with the code reader, could be set to operate only with a specific type of IMC composition.

## Claims

1. A method of providing an in-mold coated molded article, comprising:
- injecting a molten resin into a mold cavity (16) until the molding cavity (16) is substantially filled;
- allowing the injected molten resin to cool in the molding cavity (16) to form a molded article; and
- injecting a coating composition into the molding cavity (16) and onto the molded article to coat the molded article when at least a surface to be coated of the molded article has reached a modulus sufficient to support said coating composition, wherein the coating composition is injected into the mold cavity (16) based on the elapsed time from beginning of the molding process (Tₒ) or the pressure or temperature measured by a sensor;
**characterized by**
- recording operating parameters set on a control apparatus (60) about said in-mold coated article by a data collection means, the recorded data including at least one of (i) the elapsed time setting; from the beginning of the molding process (Tₒ) until said coating composition is injected into the molding cavity (16), (ii) the pressure of the molding cavity (16) when said coating composition is initially injected into the molding cavity (16), and (iii) the temperature in the molding cavity (16) when said coating composition is initially injected into the molding cavity (16);
- providing by the control apparatus (60) a user interface wherein a user is presented with a plurality of part icons corresponding to a plurality of in-mold coated articles;
- selecting a specific part icon from said plurality of part icons that corresponds to a specific one of said plurality of in-mold coated articles; and
- presetting at least one in-mold coating parameter based on said selected part icons.

2. The method of claim 1 further comprising the step of transferring said recorded data to a remote location.

## Patentansprüche

1. Verfahren zur Bereitstellung eines In-Mold-beschichteten Formlings, umfassend:
- Einspritzen eines schmelzflüssigen Harzes in einen Formhohlraum (16) bis der Formhohlraum (16) im Wesentlichen gefüllt ist;
- Ermöglichen, dass das eingespritzte schmelzflüssige Harz im Formhohlraum (16) abkühlt, um einen Formling zu bilden; und
- Einspritzen einer Beschichtungszusammensetzung in den Formhohlraum (16) und auf den Formling, um den Formling zu beschichten, wenn mindestens eine zu beschichtende Oberfläche des Formlings einen Modul erreicht hat, der ausreicht, um die Beschichtungszusammensetzung zu tragen, wobei die Beschichtungszusammensetzung auf Grundlage der seit dem Anfang des Formprozesses (T₀) verstrichenen Zeit oder dem Druck oder der Temperatur, die/der durch einen Sensor gemessen wird, in den Formhohlraum (16) eingespritzt wird;
**gekennzeichnet durch**
- Aufzeichnen von auf einer Steuervorrichtung (60) eingestellten Betriebsparametern über den In-Mold-beschichteten Gegenstand **durch** eine Datensammeleinrichtung, wobei die aufgezeichneten Daten mindestens eines umfassen von: (i) die Einstellungen der seit dem Anfang des Formprozesses (T₀) verstrichenen Zeit, bis die Beschichtungszusammensetzung in den Formhohlraum (16) eingespritzt wird, (ii) den Druck des Formhohlraums (16), wenn die Beschichtungszusammensetzung am Anfang in den Formhohlraum (16) eingespritzt wird, und (iii) die Temperatur im Formhohlraum (16), wenn die Beschichtungszusammensetzung am Anfang in den Formhohlraum (16) eingespritzt wird;
- Bereitstellen einer Benutzeroberfläche **durch** die Steuervorrichtung (60), wobei einem Benutzer eine Mehrzahl von Werkstück-Ikons dargeboten wird, entsprechend einer Mehrzahl von In-Mold-beschichteten Gegenständen;
- Auswählen eines spezifischen Werkstück-Ikons aus der Mehrzahl von Werkstück-Ikons, das einem spezifischen der Mehrzahl von In-Mold-beschichteten Gegenständen entspricht; und
- voreinstellen mindestens eines In-Mold-Beschichtungsparameters auf Grundlage der ausgewählten Werkstück-Ikons.

2. Verfahren nach Anspruch 1, weiter umfassend den Schritt: Übertragen der aufgezeichneten Daten zu einer entfernten Stelle.

## Revendications

1. Procédé consistant à fournir un article moulé et revêtu dans un moule, comprenant les étapes consistant à :
- injecter une résine fondue dans une cavité de moulage (16) jusqu'à ce que la cavité de moulage (16) soit essentiellement remplie ;
- permettre à la résine fondue injectée de refroidir dans la cavité de moulage (16) pour former un article moulé ; et
- injecter une composition de revêtement dans la cavité de moulage (16) et sur l'article moulé pour revêtir l'article moulé lorsque au moins une surface à revêtir de l'article moulé a atteint un module suffisant pour supporter ladite composition de revêtement, dans lequel la composition de revêtement est injectée dans la cavité de moulage (16) en se basant sur le temps écoulé depuis le début du processus de moulage T₀ ou sur la pression ou sur la température mesurée par un capteur ;
**caractérisé par**
- l'enregistrement des paramètres opérationnels réglés sur un appareil de commande (60) concernant ledit article revêtu dans le moule à l'aide d'un moyen de collecte de données, les données enregistrées comprenant au moins un parmi (i) le réglage du temps écoulé depuis le début du processus de moulage (T₀) jusqu'à ce que ladite composition de revêtement soit injectée dans la cavité de moulage (16), (ii) la pression de la cavité de moulage (16) lorsque ladite composition de revêtement est initialement injectée dans la cavité de moulage (16), et (iii) la température dans la cavité de moulage (16) lorsque ladite composition de revêtement est initialement injectée dans la cavité de moulage (16) ;
- la fourniture à l'aide de l'appareil de commande (60) d'une interface utilisateur dans laquelle une pluralité d'icônes de pièce correspondant à une pluralité d'articles revêtus dans un moule est présentée à un utilisateur ;
- la sélection parmi ladite pluralité d'icônes de pièce, d'une icône de pièce spécifique qui correspond à un article spécifique de ladite pluralité d'articles revêtus dans un moule ; et
- le préréglage d'au moins un paramètre de revêtement dans un moule en se basant sur lesdites icônes de pièce sélectionnées.

2. Procédé selon la revendication 1 comprenant en outre l'étape consistant à transférer lesdites données enregistrées dans un emplacement à distance.
